# EUROPÄISCHE PATENTSCHRIFT

(11) **EP 0 691 149 B1**
(45) Veröffentlichungstag und Bekanntmachung des Hinweises auf die Patenterteilung: **15.09.1999**
(21) Anmeldenummer: 95110555.0
(22) Anmeldetag: 06.07.1995
(51) Int. Cl.: B01D 17/04

(54) **Verfahren zum Trennen einer Öl/Wasser-Vermengung**
Process for separating a mixture of oil and water
Procédé pour la séparation d'un mélange d'huile et d'eau

(30) Priorität: 09.07.1994 DE 4424250
(43) Veröffentlichungstag der Anmeldung: 10.01.1996
(73) Patentinhaber: INTEGRAL Technologie GmbH, 24941 Flensburg (DE)
(72) Erfinder: Joachim, Paul, D-24937 Flensburg (DE)
(74) Vertreter: Biehl, Christian, Dipl.-Phys.

(56) Entgegenhaltungen:
- WO-A-92/13051
- DE-A- 3 717 635
- FR-A- 2 295 772

## Beschreibung

Die Erfindung betrifft ein Verfahren zum Trennen einer Öl/Wasser-Vermengung nach dem Oberbegriff des Hauptanspruches.

Öl/Wasser-Vermengungen treten in der Praxis entweder zufällig oder gezielt als Gemisch oder als Emulsion auf.

Öl/Wasser-Emulsionen sind beispielsweise Kühl- oder Schmierstoffe wie sie in der Bearbeitungstechnik zur Kühlung und Schmierung von Werkstücken und Werkzeugen eingesetzt werden. Viele verwendete Kühl-/Schmierstoffe (KSS) bestehen in der Hauptsache aus Öl bzw. ölhaltigen oder ölartigen Substanzen und Wasser bzw. wässrigen Flüssigkeiten, zu denen oberflächenaktive Substanzen oder Lösemittel hinzugesetzt sein können. Auch Schwermetalle können enthalten sein.

Bisher werden derartige Mischungen bzw. Emulsionen von Öl und Wasser nur durch Zugabe von chemischen Emulsionsspaltern getrennt. Als unbehandelte Emulsion ist die genannte Substanz jedoch als Umweltschadstoff zu behandeln und nur unter großen Kosten entsorgbar.

Daher gibt es bereits mechanische, physikalische und chemische Verfahren, um gebrauchte bzw. verbrauchte Kühl-/Schmierstoffe völlig zu entsorgen. Diese Verfahren können einzeln oder auch in Kombination angewendet werden. Hohe Kosten, die bei den teils nicht unerheblichen Volumina wirtschaftlich nur schwer tragbar sind, lassen sich jedoch nicht vermeiden.

Es wäre daher von Vorteil, wenn man die Kühl/Schmierstoffe zunächst in ihre Bestandteile (im folgenden als "Phasen" bezeichnet) auftrennen könnte. Durch diese Auftrennung in die Öl- und die Wasser-Phase kann man die zu entsorgenden Mengen, die einem aufwendigen Wiederverwendungsverfahren zugeführt werden müssen, erheblich reduzieren, und erhält ggf. einzelne wiederverwendbare oder separat entsorgbare Phasen. Die wiederverwendbaren Phasen können ggf. auch zunächst aufkonzentriert werden, um sie weiterzubehandeln.

Bisher ist auf diesem Gebiet die gattungsbildende DE-A-37 17635 bekannt, die die Aufbereitung von Öl-/Wasser-Emulsionen, insbesondere das "Brechen" dieser Emulsionen unter Gewinnung einer Öl- und einer Wasserphase beschreibt, wobei die Entstehung von Schlämmen weitestgehend vermieden werden soll. Dabei wird vorgeschlagen, die wässrige Phase auszukristallisieren, wobei insbesondere ein "Kristallhaufenwerk" gebildet wird, bei dem ausreichend große Zwischenräume vorhanden sind, um den Laplacedruck mit dem die ölhaltige Restflüssigkeit im Kristallhaufwerk festgehalten wird, kleinzuhalten.

Wie ausgeführt, ist es für die Durchführung dieses Verfahrens des standes der Technik von großer Bedeutung, daß die Verfahrensparameter so gewählt werden, daß permeable Kristallhaufwerke bzw. permeable Agglomerate von Kristallen entstehen, die nach der Separation des Öls leider noch immer einen anhaftenden Restölfilm aufweisen, der mit Reinwasser abgespült wird.

Für diese Separation und Waschung der Eiskristalle wird der Gegenstrombetrieb mit Festbettwaschung oder eine Schwarmwaschung vorgeschlagen. Hierbei nun wiederum darf durch gleichbleibende Temperatur die Kristallgröße und Kapillargröße während der Trennung der Kristalle von der Restflüssigkeit und dieser Spülung nicht verändert werden.

Dieses Verfahren bedarf einer aufwendigen Kontrolle aller Verfahrensparameter und leidet daran, daß eine ungenügende Trennung der Ölphase von den "makroskopischen" Kristallen erfolgt.

Der Erfindung liegt dagegen nicht die Aufgabe zugrunde, möglichst reines Wasser zu schaffen, sondern ein kostengünstiges Verfahren zur Behandlung von KSS zu schaffen, bei dem die einzelnen Phasen möglichst weitgehend getrennt werden. Es sollen also aus großen Mengen KSS rationell der Öl bzw. Schwermetallanteil für die getrennte Entsorgung aufkonzentriert werden. Erfindungsgemäß wird dies durch das im Anspruch 1 vorgeschlagene Verfahren gelöst. Die Unteransprüche geben vorteilhafte Ausführungsformen der Erfindung wieder.

Insbesondere ist vorteilhaft, daß durch gezieltes Gefrieren der Kühl-/Schmierstoffe insbesondere bei Zugabe gefrierpunkterniedrigender Substanzen erreicht werden kann, daß sich die Mischung in zwei oder mehr Phasen auftrennt. Je nach zu behandelnder Substanz kann eine andere Temperatur eingestellt werden. Dabei ist es möglich, bei Emulsionen eine Spaltung herbeizuführen, bei denen andere Verfahren großen Aufwand betreiben müssen.

Das erzeugte Eis einer Wasserphase kann makroskopisch, also in fester Form vorliegen, oder in Form nur mit dem Mikroskop einzeln betrachtbarer Kristalle. Bei letzteren Kristallen ist Öl in keiner Weise in die Kristalle eingeschlossen. Es bilden sich zwar trübende "wolkenartige", nicht feste Strukturen, aus denen aber nicht gefrorene Vermengung austreten kann. Eis, insbesondere in Form einer wässrige Suspension von Eiskristallen, wird anschließend in einem Eiskonzentrator aufkonzentriert. Durch mehrmaliges Behandeln der nichtgefrorenen Phase kann die Reinheit dieser Phase dabei erheblich gesteigert werden. Auch ist es möglich, das Verfahren in mehreren Gefrier- und Trenn-Schritten durchzuführen.

Besonders vorteilhaft ist es, den Gefrier- und Trenn-Prozeß mit einer Ultrafiltration oder einer Umkehrosmose zu kombinieren, insbesondere ein solches Verfahren nachzuschalten, da es sich gezeigt hat, daß diese Verfahren die geringen Restbestandteile einer Verunreinigung besser entfernen können. Je nach anschließender Verwendung oder Abgabe des Wassers lassen sich so noch weitere oder Restsubstanzen ausfiltern.

Weitere Merkmale und Vorteile der Erfindung ergeben sich aus nachfolgender Beschreibung eines bevorzugten Ausführungsbeispiels anhand der beigefügten Zeichnung. Dabei zeigt:
- Fig. 1: eine schematische Darstellung des Gefrierprozesses, der Wasser und das ggf. schwermetallhaltige Öl trennt,
- Fig. 2: einen Gefrierprozeß, bei dem nach einem ersten Gefrierprozeß die Phasen in einer Trennanlage aufkonzentriert werden,
- Fig. 3: einen mehrstufigen Gefrierprozeß, und
- Fig. 4: die Nacheinanderschaltung des Gefrier/Trenn-Prozesses mit anderen Trennprozessen, z. B. einer mechanischen Ultrafiltration.

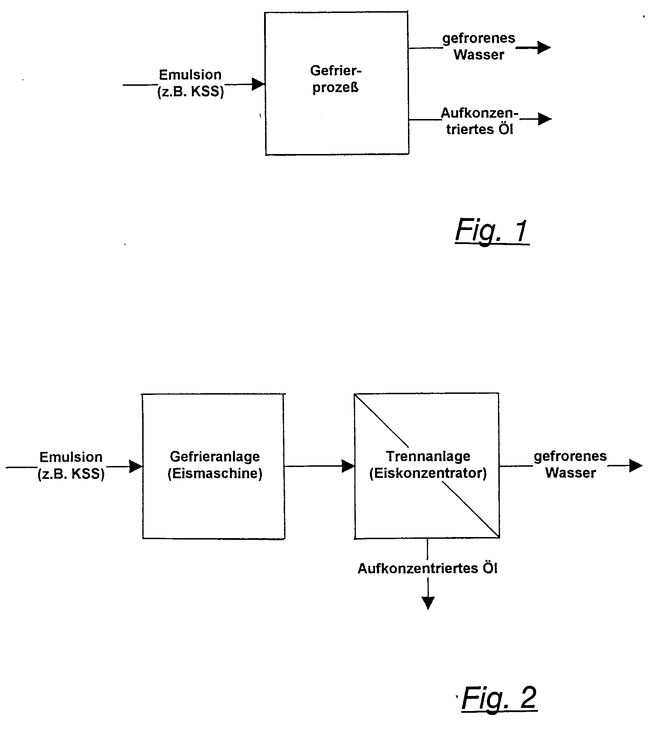

Das in der Fig. 1 dargestellte einfache Gefrieren der ggf. schwermetallhaltigen Kühl-/Schmiermischung erreicht bereits eine Trennung der Emulsion in zwei Phasen. Gegebenenfalls kann auch eine dritte Phase erzeugt werden, die dann ebenso in einem Konzentrator absepariert werden kann. Diese Emulsionsspaltung ist wesentlich umweltfreundlicher als die durch Hinzugeben eines chemischen Emulsionsspalters. Nach Einsetzen der Emulsionsspaltung kann durch Absetzen der entsprechenden Phasen erreicht werden, daß sich durch einfachste mechanische Mittel die Phasen trennen. So kann z. B. unterhalb des Öls das Wasser abgelassen werden, um sodann das Öl durch ein weiteres, ggf. weiter oben liegendes, Ventil abzulassen.

Abhängig von der Art des Gefrierprozesses ist das erzeugte Eis erfindungsgemäß kein hochkonzentriertes gefrorenes Eis in Form von "Eiswürfeln", sondern eine wässrige Suspension von Eiskristallen und Wasser bzw. Öl. Daher kann eine Aufkonzentrierung in einem sogenannten "Eiskonzentrator" erfolgen, der die gefrorenen Eiskristalle von der nichtgefrorenen Phase durch mechanisches Rühren und dergleichen trennt. Die nichtgefrorene Phase besteht dann in der Regel aus aufkonzentriertem Öl und einem geringeren Anteil an Wasser. Diese nichtgefrorene Phase kann dem Ausgangsprodukt wieder zugeführt werden und auf diese Weise das Öl durch mehrmaliges Durchlaufen des Prozesses aufkonzentriert werden. Das Wasser wird gleichzeitig allmählich ausgefroren und kann beispielsweise abgeschöpft werden.

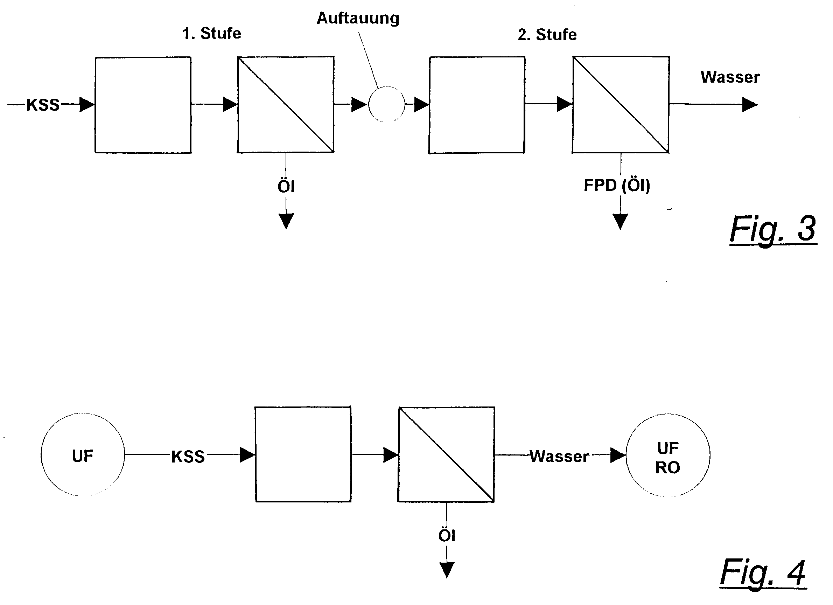

Weiter läßt sich die Reinheit der Phasen dadurch erhöhen, daß man den Gefrierprozeß mehrfach wiederholt, wie dies beispielhaft in Fig. 3 dargestellt ist (dort ist der aus Fig. 2 bekannte Aufbau doppelt hintereinander vorhanden). Dabei wird beim Gefrierens einer wässrigen Eis/Öl-Suspension dem Ausgangsprodukt vorteilhafterweise eine gefrierpunkterniedrigende Substanz (FPD) zugesetzt. Diese kann später, z. B. chemisch, leicht abgetrennt werden, um größtenteils wiederverwendet zu werden. Schwermetalle werden sich je nach Bindungsverhalten entweder als Kondensationskeime in mikroskopischen Kristallen, im Öl oder ggf. in dieser Substanz aufkonzentrieren.

Weiter kann, wie in Fig. 4 dargestellt, dem Gefrier/-Trenn-Prozeß eine Vorbehandlung (z. B. Ultrafiltration (UF)) vor- oder nachgeschaltet werden. Bevorzugt wird eine Nachschaltung, die es erlaubt, anders als im Stand der Technik besonders feine Filter mit geringem Durchsatz zu verwenden, da die größeren Mengen an Öl, die beispielsweise einen Partikel-ausfilternden Filter beeinträchtigen würden, bereits in der im Dauerbetrieb arbeitenden Öl/Wasser-Gefriereinrichtung weitgehend getrennt wurden.

## Patentansprüche

1. Verfahren zum Trennen einer Öl/Wasser-Vermengung, mit einer Gefrierstufe und einer Aufkonzentration des ausgefrorenen Wassers
gekennzeichnet durch
- Zugeben eines Additivs zu der Emulsion zur Herabsetzung des Gefrierpunkts der Emulsion,
- nach Abkühlen bis zur beginnenden Eisbildung und Erzeugung eines Eis/Flüssigkeits-Gemisches, Abtrennen überwiegend mikroskopischer Eiskristalle aus dem Eis/Flüssigkeits-Gemisch in einem Konzentrator, und
- Rückführen des nichtgefrorenen Flüssigkeitsgemisches zu dem abzukühlenden Emulsion/Additiv/Flüssigkeits-Gemisch.

2. Verfahren nach Anspruch 1, dadurch gekennzeichnet, daß das Abkühlen des Emulsion/Additiv/Flüssigkeits-Gemischs bis auf eine Temperatur erfolgt, bei der sich überwiegend mikroskopische, noch nicht aber als wesentlicher Bestandteil makroskopische Eiskristalle ausbilden.

3. Verfahren nach einem der vorangehenden Ansprüche, gekennzeichnet durch Abtrennen einer wenigstens einer weiteren, einer dritten Phase des ggf. schwermetallhaltigen Öl/Eis/Flüssigkeits-Gemisch in einem Konzentrator.

## Claims

1. Process for the separation of an oil/water mixture, with a freezing stage and a concentration of the frozen water, characterized by the addition of an additive to the emulsion for reducing the freezing point thereof, after cooling and to the start of ice formation and the production of an ice/liquid mixture, separation of mainly microscopic ice crystals from the ice/liquid mixture in a concentrator and the return of the unfrozen liquid mixture to the emulsion/additive/liquid mixture to be cooled.

2. Process according to claim 1, characterized in that the cooling of the emulsion/additive/liquid mixture takes place to a temperature at which mainly microscopic ice crystals are formed, but not as yet macroscopic ice crystals as an essential constituent.

3. Process according to one of the preceding claims, characterized by the separation of at least one further, third phase of the optionally heavy metal-containing oil/ice/liquid mixture in a concentrator.

## Revendications

1. Procédé de dissociation d'un mélange huile-eau, comprenant une étape de congélation et une concentration de l'eau séparée par congélation,
caractérisé par
- l'addition d'un additif à l'émulsion pour l'abaissement du point de congélation de celle-ci,
- après refroidissement jusqu'à la formation commençante de glace et la production d'un mélange glace-liquide, la séparation de cristaux de glace en majorité microscopiques du mélange glace-liquide dans un concentrateur, et
- le renvoi du mélange de liquides non congelé au mélange émulsion-additif-liquide à refroidir.

2. Procédé selon la revendication 1, caractérisé par le fait que le refroidissement du mélange émulsion-additif-liquide a lieu jusqu'à une température à laquelle se forment des cristaux de glace en majorité microscopiques, mais pas encore macroscopiques formant un constituant principal.

3. Procédé selon l'une des revendications précédentes, caractérisé par la séparation d'au moins une troisième phase du mélange huile-glace-liquide, contenant éventuellement des métaux lourds, dans un concentrateur.
